# EUROPEAN PATENT SPECIFICATION

(11) **EP 4 077 467 B1**
(45) Date of publication and mention of the grant of the patent: **04.03.2026**
(21) Application number: 20823804.8
(22) Date of filing: 11.12.2020
(51) Int. Cl.: C08G 63/06, C08G 63/60, C08L 67/04

(54) **GLYCOLIC ACID POLYMER**
GLYCOLSÄUREPOLYMER
POLYMÈRE D'ACIDE GLYCOLIQUE

(30) Priority: 18.12.2019 EP 19315162; 19.12.2019 US 201962950275 P; 06.10.2020 US 202063088067 P
(43) Date of publication of application: 26.10.2022
(73) Proprietor: Syensqo Specialty Polymers USA, LLC, Alpharetta GA 30005-3914 (US)
(72) Inventor: VANDERVEKEN, Yves, 3001 Leuven (BE); TOURAUD, Franck, 38780 Eyzin Pinet (FR); BENSON, Bryan, Ball Ground, GA 30107 (US); JEOL, Stéphane, 69230 Saint-Genis-Laval (FR); SINGLETARY, Nancy, J., Alpharetta, GA 30004 (US)
(74) Representative: Benvenuti, Federica
(86) International application number: PCT/EP2020/085813
(87) International publication number: WO 2021/122386

(56) References cited:
- US-A- 4 156 676
- US-A1- 2006 009 611

## Description

The present invention pertains to a novel glycolic acid polymer, a method of making the polymer, a composition comprising the polymer, a method for producing a multilayer product containing the polymer or the composition, and articles made therefrom.

Due to its excellent mechanical and barrier properties combined with biodegradability, glycolic acid polymer (PGA) is a polymer of high interest for multiple applications in consumer, oil and gas, and biomedical applications.

In multilayer bottles of small size (< 500 ml), widely used for beverages, such as tea, fruit juices, carbonated beverages, sodas, and the like, for which extended shelf life is needed, its excellent gas barrier combined with its compatibility with mechanical recycling of polyethylene terephthalate (PET), makes it a material of choice.

In oil and gas applications, PGA is a material of choice for use as downhole tool or downhole tool member during drilling and fracking operations. The high strength and degradability allow the material to perform temporary roles in the process and degrade away without the need for drill-out.

While techniques providing linear PGA consisting essentially of recurring units -[CH₂-C(O)-O]- by polycondensation of cyclic glycolide, manufacture of PGA polymers from direct polycondensation of glycolic acid, in the presence of additional modifying/branching monomers has been proposed as an economical and efficient alternative, providing high molecular weight PGA having advantageous rheological behaviour.

In this area, US 7153587 (MITSUI CHEMICALS INC) 26/12/2006 provides a polyester resin which comprises (a-1) 45 to 99 percent by mole of an oxycarboxylic acid unit having 5 carbon atoms or less, (a-2) 0.5 to 27.5 percent by mole of an aromatic dicarboxylic acid unit, and (a-3) 0.5 to 27.5 percent by mole of a short chain aliphatic diol unit having 4 carbon atoms or less, and containing (a-1) to (a-3) in a total amount of 95 percent by mole or greater, wherein the oxycarboxylic acid is preferably glycolic acid; the aromatic carboxylic acid can be isophthalic acid, phthalic acid, or 2,6-naphthalenedicarboxylic acid; and the short chain aliphatic diol is any of ethylene glycol, diethylene glycol, 1,2-propanediol, 1,3-propanediol, 1,4-butanediol, and wherein the said polyester may additionally comprise units derived from aliphatic dicarboxylic acids, and/or from a monomer having a functionality of 3 or more, e.g. a polyfunctional acid having 3 or more carboxyl groups, a polyfunctional alcohol having 3 or more hydroxyl groups, and hydroxy-acids where the sum of hydroxyl and carboxyl groups exceeds 3. Nevertheless, the PGA provided in this document tend to be deficient in barrier properties, with respect to PGA consisting essentially of glycolic acid units.

Hence, a technology to produce PGA by direct polycondensation of glycolic acid using as branching agents a triol (trimethylolpropane) and a diacid (isophtalic acid) has been developped, leading also to build melt strength for processibility of the PGA.

In this area, WO 2018/115008 (SOLVAY SA) 28/06/2018 is directed to a branched glycolic acid polymer obtained from polycondensation reaction of a monomer mixture consisting of: (i) glycolic acid (GA); (ii) optionally, at least one hydroxyacid having only one hydroxyl group and only one carboxylic acid group different from GA [hydroxyacid (A)], wherein the molar amount of hydroxyacid (A) is of at most 5 % moles with respect to the sum of moles of GA and hydroxyacid (A); (iii) at least one polyol comprising at least three hydroxyl groups and being free from carboxylic acid group [polyol (H)]; (iv) at least one aromatic diacid comprising two aromatic carboxylic acid groups and being free from hydroxyl groups [diacid (AR)]; and (iv) optionally at least one carboxylic acid having one carboxylic acid group and being free from hydroxyl group [monoacid (C)], wherein: the amount of polyol (H) is such that the number of hydroxyl groups thereof is comprised between 0.050 and 0.750 % with respect to the overall number of carboxyl groups of glycolic acid and the hydroxyacid (A), if present; the amount of diacid (AR) is such that the number of carboxylic acid groups thereof is comprised between 0.050 and 0.750 % with respect to the overall number of hydroxyl groups of glycolic acid and of the hydroxyacid (A), if present; the amount of said monoacid (C), when present, is such that the number of carboxylic acid groups thereof is comprised between 0.0001 and 0.010 % with respect to the overall number of hydroxyl groups of glycolic acid and of the hydroxyacid (A), if present.

However, it has been observed that the polymers obtained thanks to this technology present a significant reduction in melt viscosity, i.e. poorer melt stability, while exposed to temperature and shear in typical melt processing applications. This leads to difficult processing conditions and unpredictable melt performance in the material.

Document US 2006/009611 discloses polymers that have improved thermal properties and can be used to form different articles such as containers. In example 3 are used glycolic acid, propanediol and pentaerythritol, as well as dimethylterephthalate.

It remains therefore a need for an improved branched glycolic acid polymer with a higher melt stability in order to benefit of a larger polymer processing window for typical melt processing techniques and in order to have a more stable polymer easier to handle and with more predictable rheological behavior during pelletization, compounding, injection molding, blow molding, compression molding and film extrusion.

The invention hereby pertains to a glycolic acid polymer [polymer (PGA)], said polymer PGA being obtained from polycondensation reaction of a monomer mixture consisting of:
(i) glycolic acid (GA);
(ii) optionally, at least one hydroxyacid having only one hydroxyl group and only one carboxylic acid group different from GA [hydroxyacid (A)], wherein the molar amount of hydroxyacid (A) is of at most 5 % moles with respect to the sum of moles of GA and hydroxyacid (A);
(iii) at least one polyol comprising at least three hydroxyl groups and being free from carboxylic acid group [polyol (H)];
(iv) at least one alcohol comprising one or two hydroxyl groups and being free from carboxylic acid group [alcohol (AO)];
(v) optionally at least one carboxylic acid comprising one carboxylic acid group and being free from hydroxyl group [monoacid (C)]; and

The polymer (PGA) of the invention is obtained from polycondensation reaction of a monomer mixture comprising (i) glycolic acid; (ii) optionally at least one hydroxyacid (A), wherein the molar amount of hydroxyacid (A) is of at most 5 % moles with respect to the sum of moles of GA and hydroxyacid (A); (iii) at least one polyol (H); (iv) at least one alcohol (AO); (v) optionally at least one monoacid (C).

In the present invention, the polymer (PGA) is hence substantially free from any other unit derived from a monomer different from those listed above, although impurities, defects and chain ends may be present in limited amount, without these significantly affecting the performances of the polymer (PGA). In such case, the polymer (PGA) is preferably free from any unit derived from a polyacid (O), particularly free from any unit derived from a diacid and from a triacid.

More preferably, the invention pertains to a glycolic acid polymer [polymer (PGA)], said polymer PGA being obtained from polycondensation reaction of a monomer mixture consisting of:
(i) glycolic acid (GA);
(ii) optionally, at least one hydroxyacid having only one hydroxyl group and only one carboxylic acid group different from GA [hydroxyacid (A)], wherein the molar amount of hydroxyacid (A) is of at most 5 % moles with respect to the sum of moles of GA and hydroxyacid (A);
(iii) at least one polyol comprising at least three hydroxyl groups and being free from carboxylic acid group [polyol (H)]; and
(iv) at least one alcohol comprising one or two hydroxyl groups and being free from carboxylic acid group [alcohol (AO)], preferably at least one diol comprising two hydroxyl groups and being free from carboxylic acid group [diol (D)].

In such more preferred embodiment, the polymer (PGA) is hence substantially free from any other unit derived from a monomer different from those listed above, although impurities, defects and chain ends may be present in limited amount, without these significantly affecting the performances of the polymer (PGA). In such case, the polymer (PGA) is more preferably free from any unit derived from a monoacid (C) and from a polyacid (O) (particularly free from any unit derived from a diacid and from a triacid).

Most preferably, the invention pertains to a glycolic acid polymer [polymer (PGA)], said polymer PGA being obtained from polycondensation reaction of a monomer mixture consisting of:
(i) glycolic acid (GA);
(ii) optionally, at least one hydroxyacid having only one hydroxyl group and only one carboxylic acid group different from GA [hydroxyacid (A)], wherein the molar amount of hydroxyacid (A) is of at most 5 % moles with respect to the sum of moles of GA and hydroxyacid (A);
(iii) at least one polyol comprising at least three hydroxyl groups and being free from carboxylic acid group [polyol (H)]; and
(iv) at least one diol comprising two hydroxyl groups and being free from carboxylic acid group [diol (D)].

In such more preferred embodiment, the polymer (PGA) is hence substantially free from any other unit derived from a monomer different from those listed above, although impurities, defects and chain ends may be present in limited amount, without these significantly affecting the performances of the polymer (PGA). In such case, the polymer (PGA) is more preferably free from any unit derived from a monoalcohol (MO), from a monoacid (C) and from a polyacid (O) (particularly free from any unit derived from a diacid and from a triacid).

The polymer (PGA) comprises units derived from polycondensation of notably GA and optionally a hydroxyacid (A), as defined above. The choice of the said hydroxyacid (A) is not limited, and all hydroxyacids capable of polycondensing, i.e. of forming a macromolecule by condensation (chain addition of monomers with removal of water) can be used.

The hydroxyacid (A) is advantageously selected from the group consisting of lactic acid, 3-hydroxybutyric acid, 4-hydroxybutyric acid, 4-hydroxyvaleric acid, 5-hydroxyvaleric acid, 6-hydroxycaproic acid. In general, hydroxyacids (A) that have a primary alcohol are preferred as they are more reactive. With these regards, good results, in particular, can be obtained when the hydroxyacid (A) is lactic acid (LA) (L- or D- isomers, either in racemic mixture or as single isomer).

In one variant of the invention, both GA and the hydroxyacid (A), if present, are bio-sourced, that is to say derived from a natural and renewable raw material, as opposed to a fossil raw material. The use of bio-sourced PGA and, if applicable, hydroxyacids (A), allows the synthesis of "green" polymers, that is to say polymers synthesized from renewable raw material.

When present, the amount of hydroxyacid (A) is of at most 5 % moles, preferably of at most 4 % moles, more preferably of at most 3 % moles; and/or said amount can be advantageously as low as 0.1 % moles, with respect to the sum of moles of GA and hydroxyacid (A). It is generally understood that the amount of hydroxyacid (A) will be tuned so as to possibly confer certain advantages while not too seriously detrimentally affect the barrier performances which are proper to the PGA polymer structure.

The polymer (PGA) according to the invention is particularly characterized in that the hydroxyacid (A) is selected from the group consisting of lactic acid, 3-hydroxybutyric acid, 4-hydroxybutyric acid, 4-hydroxyvaleric acid, 5-hydroxyvaleric acid and 6-hydroxycaproic acid, preferably the hydroxyacid (A) is lactic acid (LA) (L- or D- isomer, either in racemic mixture or as single isomer), and/or in that the hydroxyacid (A) is present in an amount of at most 4 % moles, more preferably of at most 3 % moles, with respect to the sum of moles of GA and of hydroxyacid (A).

Embodiment's where no additional hydroxyacid (A) is used, in combination with GA, are within the scope of the present invention, and may be preferred from the perspective of maximizing barrier performances.

The polyol (H) comprises at least three hydroxyl groups, that is to say three hydroxyl groups which are covalently bound to carbon atoms of the polyol (H).

The choice of polyol (H) is not particularly limited. Polyol (H) can be selected from the group consisting of:
- triols, in particularly selected from the group consisting of glycerol, trimethylolethane, trimethylolpropane, trimethylolbutane, 2,3-di(2'-hydroxyethyl)-cyclohexan-1-ol, hexane-1,2,6-triol, 1,1,1-tris(hydroxymethyl)ethane, 3-(2'-hydroxyethoxy)propane-1,2-diol, 3-(2'-hydroxypropoxy)-propane-1,2-diol, 2-(2'-hydroxyethoxy)-hexane-1,2-diol, 6-(2'hydroxypropoxy)-hexane-1,2-diol, 1,1,1-tris-[(2'-hydroxyethoxy)-methylethane, 1,1,1-tris-[(2'-hydroxypropoxy)-methyl-propane, 1,1,1-tris-(4'-hydroxyphenyl)ethane, 1,1,1-tris-(hydroxyphenyl)-propane, 1,1,5-tris-(hydroxyphenyl)-3-methylpentane, trimethylolpropane ethoxylate, trimethylolpropane propoxylate, tris(hydroxymethyl)aminomethane;
- tetraols, in particularly selected from the group consisting of diglycerol, di(trimethylolpropane), pentaerythritol, 1,1,4-tris-(dihydroxyphenyl)-butane;
- polyols comprising 5 hydroxyl groups, in particular triglycerol;
- polyols comprising 6 hydroxyl groups, in particular dipentaerythritol, mannitol, sorbitol; and
- polyols comprising 8 hydroxyl groups, in particular tripentaerythritol.

Preferred polyols (H) are triols (in particular triols selected from the group consisting of glycerol, trimethylolpropane and trimethylolbutane) and tetraols (in particular pentaerythritol), as above detailed.

A polyol (H) which has been found to provide particularly good results within the frame of the present invention is trimethylolpropane.

The polyol (H) is used in an amount such that the number of hydroxyl groups thereof is advantageously comprised between 0.050 and 1.200 % with respect to the overall number of carboxyl groups of glycolic acid and of the hydroxyacid (A), if present.

The polyol (H) is used in an amount such that the number of hydroxyl groups thereof is advantageously of at least 0.050 %, preferably of at least 0.075 %, more preferably of at least 0.100 %, most preferably of at least 0.120 % and/or advantageously of at most 1.200 %, preferably of at most 1.000 %, more preferably of at most 0.750 %, particularly more preferably of at most 0.650 % and most preferably of at most 0.600 %, with respect to the overall number of carboxyl groups of glycolic acid and of the hydroxyacid (A), if present.

An amount of polyol (H) such that the number of hydroxyl groups thereof is of from 0.120 to 0.600 % with respect to the overall number of carboxyl groups of glycolic acid and of hydroxyacid (A), if present, has been found particularly useful according to the preferred embodiments of the present invention.

The polymer (PGA) according to the invention is particularly characterized in that the polyol (H) is selected from the group consisting of triols; tetraols; polyols comprising 5 hydroxyl groups; polyols comprising 6 hydroxyl groups; and polyols comprising 8 hydroxyl groups, all as defined above, and/or wherein the polyol (H) is used in an amount such that the number of hydroxyl groups thereof is as defined above.

The alcohol (AO) comprises one or two hydroxyl groups, that is to say one or two hydroxyl groups which are covalently bound to carbon atoms of the alcohol (AO).

By "at least one alcohol comprising one or two hydroxyl groups", it is meant, according to the present invention that one or more than one alcohol comprising one or two hydroxyl groups can be used.

The alcohol (AO) can be a monoalcohol (MO) comprising one hydroxyl group, a diol (D) comprising two hydroxyl groups or a mixture of a monoalcohol (MO) and of a diol (D).

When the alcohol (AO) is a monoalcohol (MO), the monoalcohol (MO) can be an aliphatic monoalcohol or an aromatic monoalcohol.

The monoalcohol (MO) is characterized by a boiling point at atmospheric pressure, advantageously of at least 90°C, preferably of at least 100°C, more preferably of at least 125°C and most preferably of at least 150°C.

When monoalcohol (MO) is an aliphatic monoalcohol, the monoalcohol (MO) is advantageously an aliphatic monoalcohol of formula below:

R_{Hm}-OH (formula MO-1)

wherein R_{Hm} is a monovalent aliphatic group having one or more than one carbon atom, in particular having 3 or more carbon atoms.

It is generally understood that better results are obtained with long chain aliphatic monoalcohols, i.e. aliphatic monoalcohols (MO) wherein the total number of carbon atoms is advantageously at least 6. The aliphatic monoalcohol (MO) possesses preferably from 6 to 36 carbon atoms and more preferably from 6 to 24 carbon atoms.

Among aliphatic monoalcohol (MO) which can be advantageously used in the present invention, mention can be notably made of hexanol-1 [CH₃(CH₂)sOH], dodecanol [H₃C-(CH₂)₁₁-OH], hexadecanol or cetyl alcohol [H₃C-(CH₂)₁₅-OH], octadecanol or stearyl alcohol [H₃C-(CH₂)₁₇-OH], arachidic alcohol [H₃C-(CH₂)₁₈-COOH], docosanol or behenic alocohol [H₃C-(CH₂)₂₁-OH], cyclohexanol and menthol.

When monoalcohol (MO) is an aromatic monoalcohol, the aromatic monoalcohol (MO) is advantageously selected from the group consisting of phenol, cresol, naphthol, benzyl alcohol, 2-phenyl ethanol and 3-phenyl propanol.

The monoalcohol (MO) is preferably dodecanol, benzyl alcohol, menthol and mixtures thereof.

When the alcohol (AO) is a diol (D), the diol (D) is characterized by a boiling point at atomospheric pressure, advantageously of at least 100°C, preferably of at least 150°C, more preferably of at least 200°C and most preferably of at least 230°C.

Non limitative examples of diols (D) are notably ethylene glycol, 2,2-dimethylpropane-1,3-diol, pentane-1,2-diol, pentane-1,5-diol, hexane-1,2-diol, heptane-1,2-diol, diethylene glycol, hexane-1,6-diol, heptane-1,7-diol, 1,4-cyclohexanediol, cis 1,2-cyclohexanediol, trans 1,2-cyclohexanediol, polyetherpolyol diols Dianol^{(R)} 220, 1,4-cyclohexane dimethanol, isosorbide, isoidide, dodecane 1, 12-diol and mixtures thereof.

The diol (D) is preferably selected from diethyleneglycol, 1,4-cyclohexane dimethanol, isosorbide, isoidide, dodecane 1,12-diol and mixtures thereof.

The diol (D) is more preferably selected from diethyleneglycol, 1,4-cyclohexane dimethanol and mixtures thereof.

A diol (D) which has been shown to provide particularly good results is 1,4-cyclohexane dimethanol which is hence most particularly preferred, with a very particular preference to cis/trans isomer mixture of 1,4-cyclohexane dimethanol (CAS number 105-08-8).

The alcohol (AO) is preferably selected from diethyleneglycol, 1,4-cyclohexane dimethanol, isosorbide, isoidide, dodecane 1,12-diol, dodecanol, benzyl alcohol, menthol and mixtures thereof.

The alcohol (AO) is more preferably a diol (D) (more preferably selected from diethyleneglycol, 1,4-cyclohexane dimethanol and mixtures thereof) which is preferably characterized by a boiling point at atmospheric pressure as defined above and/or which is preferably used in an amount as defined below.

The alcohol (AO) is used in an amount such that the number of hydroxyl groups thereof is advantageously comprised between 0.010 and 0.750 % with respect to the overall number of carboxylic groups of glycolic acid and of the hydroxyacid (A), if present.

The alcohol (AO) is used in an amount such that the number of hydroxyl groups thereof is advantageously of at least 0.010 %, preferably of at least 0.050 %, more preferably of at least 0.080 % and most preferably of at least 0.100 % and/or advantageously of at most 0.750 %, preferably of at most 0.700 %, more preferably of at most 0.650 %, with respect to the overall number of carboxylic groups of glycolic acid and of the hydroxyacid (A), if present.

An amount of alcohol (AO) such that the number of hydroxyl groups thereof is of from 0.010 to 0.650 % with respect to the overall number of carboxylic groups of glycolic acid and of hydroxyacid (A), if present, has been found particularly useful according to the preferred embodiments of the present invention.

The polyol (H) and the alcohol (AO) are used in an amount such that the total number of moles of hydroxyl groups thereof minus the total number of moles of carboxylic groups of glycolic acid and of hydroxyacid (A), if present, divided by the total number of moles of carboxylic groups of glycolic acid and of hydroxyacid (A), if present, is comprised advantageously between 0 and 1 %, preferably between 0.1 and 1 % and more preferably between 0.3 and 0.9 %.

The monoacid (C) comprises one carboxylic acid group, that is to say one carboxylic acid group which is covalently bound to carbon atoms of the monoacid (C).

The choice of the monoacid (C) is not particularly limited. The monoacid (C) can be an aliphatic monoacid or an aromatic monoacid.

When monoacid (C) is an aliphatic monoacid, the monoacid (C) is advantageously an aliphatic monoacid of formula below:

R_{Hm}-COOH (formula C-1)

wherein R_{Hm} is a monovalent aliphatic group having one or more than one carbon atom, in particular having 3 or more carbon atoms.

It is generally understood that better results are obtained with long chain aliphatic monoacids, i.e. aliphatic monoacids (C) wherein the total number of carbon atoms is advantageously at least 4, preferably at least 5, more preferably at least 6. The aliphatic monoacid (C) possesses preferably from 4 to 36 carbon atoms and more preferably from 6 to 24 carbon atoms.

Among aliphatic monoacids (C) which can be advantageously used in the present invention, mention can be notably made of caprylic acid [CH₃(CH₂)₆COOH], capric acid [CH₃(CH₂)₈COOH], undecanoic acid [H₃C-(CH₂)₉-COOH], dodecanoic or lauric acid [H₃C-(CH₂)₁₀-COOH], tridecanoic acid [H₃C-(CH₂)₁₁-COOH], tetradecanoic or myristic acid [H₃C-(CH₂)₁₂-COOH], pentadecanoic acid [H₃C-(CH₂)₁₃-COOH], hexadecanoic or palmitic acid [H₃C-(CH₂)₁₄COOH], octadecanoic or stearic acid [H₃C-(CH₂)₁₆-COOH], arachidic acid [H₃C-(CH₂)₁₈-COOH], and behenic acid [H₃C-(CH₂)₂₀-COOH].

An aliphatic monoacid (C) which has been shown to provide particularly good results is stearic acid, which is hence particularly preferred.

When monoacid (C) is an aromatic monoacid, the monoacid (C) is advantageously selected from the group consisting of benzoic acid, naphthoic acid and phenylacetic acid.

The polymer (PGA) according to to the invention is particularly characterized in that the monoacid (C) is an aliphatic monoacid of formula: RHₘ-COOH (formula C-1) as defined above, or an aromatic monoacid selected from the group consisting of benzoic acid, naphthoic acid and phenylacetic acid.

When present, the monoacid (C) is preferably an aromatic monoacid.

When present, the monoacid (C) is used in an amount such that the number of carboxylic acid groups thereof is advantageously comprised between 0.010 and 2.0 % with respect to the overall number of hydroxyl groups of glycolic acid and of hydroxyacid (A), if present.

The monoacid (C) is used in an amount such that the number of carboxylic acid groups thereof is advantageously of at least 0.010 %, preferably of at least 0.030 %, more preferably of at least 0.075 %, with respect to the overall number of hydroxyl groups of glycolic acid and of hydroxyacid (A), if present; and/or advantageously of at most 2.0 %, preferably of at most 1.50 %, more preferably of at most 1.20 %, most preferably of at most 1.00 %, even most preferably of at most 0.75 %, with respect to the overall number of hydroxyl groups of glycolic acid and of hydroxyacid (A), if present.

The polymer (PGA) according to the invention is particularly characterized in that
- the amont of polyol (H) is such that the number of hydroxyl groups thereof is comprised between 0.050 and 1.200 % with respect to the overall number of carboxyl groups of glycolic acid and of the hydroxyacid (A), if present;
- the amount of alcohol (AO) is such that the number of hydroxyl groups thereof is comprised between 0.010 and 0.750 % with respect to the overall number of carboxylic groups of glycolic acid and of the hydroxyacid (A), if present; and
- the amount of monoacid (C), when present, is such that the number of carboxylic acid groups thereof is comprised between 0.010 and 2.0 % with respect to the overall number of hydroxyl groups of glycolic acid and of the hydroxyacid (A), if present.

The polymer (PGA) possesses a melt viscosity ranging advantageously from 300 to 1500 Pa x sec, when measured according to ASTM D4440-08 at a shear rate of 10 sec⁻¹ and at a temperature of 260°C. The polymers (PGA) are possessing a melt viscosity advantageously of at least 300, preferably of at least 400, more preferably of at least 500 Pa x sec, when measured according to ASTM D4440-08 at a shear rate of 10 sec⁻¹ and at a temperature of 260°C. The polymers (PGA) are possessing a melt viscosity advantageously of at most 1500, preferably of at most 1200, more preferably of at most 1000 Pa x sec, when measured according to ASTM D4440-08 at a shear rate of 10 sec⁻¹ and at a temperature of 260°C.

Polymers (PGA) which have been found to possess particularly advantageous properties are those having melt viscosities of ranging from 500 to 1000 Pa x sec, when measured according to ASTM D4440-08 at a shear rate of 10 sec⁻¹ and at a temperature of 260°C.

Advantageously, hence, the polymer (PGA) has a tan δ_{10 sec-1} in the domain of melt viscosities η_{10 sec-1} of 300 to 1500 Pa x sec, when determined at according to ASTM D4440-08 at a shear rate of 10 sec⁻¹ and at a temperature of 260°C, of exceeding 0.5, preferably of exceeding 1.0, more preferably of exceeding 1.3.

The invention further pertains to a method of making the polymer (PGA) as above detailed, said method comprising polycondensing glycolic acid (GA), optionally at least one hydroxyacid (A), at least one polyol (H), at least one alcohol (AO), and optionally at least one monoacid (C) as above detailed.

In the method of the present invention, a polycondensation catalyst may optionally be added to the monomer mixture.

Such polycondensation catalysts are well known to a person skilled in the art and may be selected, for example, from tin (II) chloride, stannous octoate, zinc acetate, zinc lactate, methanesulfonic acid, orthophosphoric acid and mixtures thereof. Methanesulfonic acid and mixtures of methanesulfonic acid with other catalysts, the ones disclosed above or others, are particularly preferred.

When added, such a catalyst is usually added in an amount of about 0.001 to 2 mol %, in particular of about 0.002 to 0.1 mol % with respect to the total moles of the monomers of the monomer mixtures.

Preferably, the step of polycondensing is carried out at least partly at a temperature such that the monomers' mixture and the formed growing polymer are in the molten phase. Generally, after a step of polycondensing in the molten state, providing for a pre-polymer possibly comprising unreacted GA, hydroxyacid (A) (when present), polyol (H), alcohol (AO), monoacid (C) (when present) and polyacid (when present), polycondensation is then pursued at a temperature such that the pre-polymer is in the solid state (this step will be referred hereunder as solid statepolymerization or SSP).

Hence, the method of the invention generally includes a first step of polymerization in the molten state to form a pre-polymer and a second step of solid state polymerization (SSP) for increasing molecular weight of the pre-polymer.

In the first step, the temperature is selected so as to maintain the monomer mixture and, with the progress of the reaction, the formed pre-polymer, in the molten state.

Generally, the first step of polycondensation in the molten state is accomplished under stirring, by maintaining the reaction mixture at temperatures ranging from 160 to 240°C; the temperature may be kept constant during this first step, or can be varied and maintained at more than one temperature plateau. According to the present invention, the expression "temperature plateau" means that the temperature is kept substantially constant for at least 5 minutes.

In the method of the present invention, the pre-polymer, possibly comprising residual monomers, as above detailed, obtained from first step of polymerization in the molten state undergoes a step of solidification and size reduction, so as to provide particulate pre-polymer material in the form of loose particles.

The particulate pre-polymer may be processed from the molten state under the form of pearls or pellets through standard techniques of pelletization and/or pastillation, or can be recovered as solidified crumbs and milled so as to provide powder.

Techniques of pelletization are generally based on extrusion, whereas the molten pre-polymer, possibly comprising residual monomers, as above detailed, is forced, possibly using a gear pump, through a die generally comprising a plurality of holes generating strands of material, which are then cut by an appropriate cutting system (e.g. a rotating blade) in the form of cylinders of given length and solidified by cooling.

Techniques of pastillation includes supplying with molten pre-polymer, possibly comprising residual monomers, as above detailed, from a vessel, pit or supply pipe system, possibly using a gear pump, to a drop-forming device, depositing drops of the molten pre-polymer on a conveyor belt, whereas droplets solidify in the form of pastilles having size ranging e.g. from 1 to 25 mm in diameter.

When recovering pre-polymer, possibly comprising residual monomers, as above detailed, by solidification under the form of crumbs, a milling step is required. Such a milling step may be carried out by any means known to a person skilled in the art, for example by milling in a high-speed grinder or in a rotary mill.

The SSP step may take place by exposing the pre-polymer, possibly comprising residual monomers, as above detailed, in its solid state, either under vacuum or under an inert gas atmosphere (e.g. under nitrogen) or both, for one or more hours or even several days, at a temperature above the glass transition temperature of the said pre-polymer, possibly comprising residual monomers, as above detailed, but below its melting temperature. Typically, such a SSP step may be carried out at a temperature of 140 to 240°C, in particular of 150 to 230°C, for example at around 170-220°C and at a pressure below 50 mbar.

Depending on the nature of the residual monomer(s) in the pre-polymer, on their proportions and on the target final viscosity/molecular weight, on the temperature and on the pressure during the overall polycondensation step, the duration of the SSP step may be a few hours to 1 week, in particular from 6 to 200 h, for example of about 10 to 150 h.

Preferably, the polycondensation reaction in the molten phase takes place under vacuum in order to evaporate the water of reaction and prevent the latter from hydrolyzing the polymer chains being formed. Very particularly preferably, polycondensation reaction in the molten phase is initiated at atmospheric pressure and the vacuum is applied gradually until a pressure of the order of a few mbar, in particular less than 50 mbar, preferably less than 20 mbar, is achieved. The SSP step is typically carried out at a pressure of about 0.1 to 50 mbar, preferably of about 0.1 to 20 mbar.

In the method of the present invention, an antioxidant may optionally be added to the reaction medium. Preferably, such an antioxidant is added between the molten phase polycondensation step and the SPP step. Such an antioxidant is typically added in an amount of about 0.01 to 1 % by weight, in particular of about 0.1 to 0.5 % by weight of the monomer mixture. Such antioxidants are well known to a person skilled in the art and may be selected, for example, from hindered phenols and hindered phosphites.

Still, the invention pertains to a composition (C) comprising polymer (PGA) and at least one additional ingredient. Generally, the composition comprises a major amount of polymer (PGA) and a minor amount of any other additional ingredient, as above mentioned. The said ingredient may be notably selected from anti-oxidants, thermal stabilizers, buffers, UV and light stabilizers, pigments, lubricants, processing aids, hydrolytic stabilizers, reinforcing agents, tougheners, plasticizers, colorants, antistatic agents, flame retardants, nucleating agents and other processing aids. It is also possible for the composition (C) to include one or more than one additional glycolic acid polymers different from polymer (PGA) as above detailed. For instance, the inventive polymer (PGA) may be admixed with linear PGA polymer obtained from ring-opening polycondensation of glycolic acid in the absence of any polyfunctional modifying monomer, or may be admixed with another branched glycolic acidbased polymer different from the polymer (PGA) of the present invention.

The amount of the said ingredient(s) is generally comprised between 0.01 and 65, preferably between 0.1 and 60 and more preferably between 0.1 and 50 wt %, with respect to the total weight of the composition (C). For embodiment's wherein the composition (C) comprising polymer (PGA) is not comprising any additional glycolic acid polymer different from polymer (PGA) of the invention, the additional ingredients, as listed above, are generally comprised in an amount of 0.01 to 65, preferably between 0.1 and 60 and more preferably between 0.1 and 50 wt %, with respect to the total weight of the composition (C).

A large selection of reinforcing agents, also called reinforcing fibers or reinforcing fillers, may be added to the composition according to the present invention. They can be selected from fibrous and particulate reinforcing agents.

A fibrous reinforcing filler is considered herein to be a material having length, width and thickness, wherein the average length is significantly larger than both the width and thickness. Generally, such a material has an aspect ratio, defined as the average ratio between the length and the largest of the width and thickness of advantageously at least 5, preferably at least 10, more preferably at least 20 and most preferably at least 50.

In some embodiments, the reinforcing fibers (preferably glass fibers) have an average length of from 3 to 50 mm. In some of such embodiments, the reinforcing fibers have an average length of advantageously from 3 to 10 mm, preferably from 3 to 8 mm, more preferably from 3 to 6 mm and most preferably from 3 to 5 mm. In alternative embodiments, the reinforcing fibers have an average length of advantageously from 10 to 50 mm, preferably from 10 to 45 mm, more preferably from 10 to 35 mm, particularly more preferably from 10 to 30 mm, most preferably from 10 to 25 mm and particularly most preferably from 15 to 25 mm. The average length of the reinforcing fibers can be taken as the average length of the reinforcing fibers prior to incorporation into the composition (C) or can be taken as the average length of the reinforcing fiber in the composition (C).

The reinforcing fillers may be selected from mineral fillers (such as talc, mica, kaolin, calcium carbonate, calcium silicate, magnesium carbonate), glass fibers, carbon fibers, synthetic polymeric fibers, aramid fibers, aluminum fibers, titanium fibers, magnesium fibers, boron carbide fibers, rock wool fibers, steel fibers and wollastonite.

Among reinforcing fillers, glass fibers are preferred, with preference to chopped strand A-, E-, C-, D-, S- and R-glass fibers, as described in chapter 5.2.3, p. 43-48 of Additives for Plastics Handbook, 2nd edition, John Murphy. Preferably, the filler is chosen from fibrous fillers. It is more preferably a reinforcing fiber that is able to withstand the high temperature applications.

The reinforcing agents may be present in the composition (C) in a total amount of advantageously greater than 10, preferably greater than 20, more preferably greater than 25, most preferably greater than 30 wt %, based on the total weight of the composition (C). The reinforcing agents may be present in the composition (C) in a total amount of advantageously less than 65, preferably less than 60, more preferably less than 55 and most preferably less than 50 wt %, based on the total weight of the composition (C).

The composition (C) of the present invention may also comprise a toughener. A toughener has generally a low Tg, with a Tg advantageously below room temperature, preferably below 0°C and more preferably below -25°C. As a result of its low Tg, the toughener is typically elastomeric at room temperature.

The toughener can be a functionalized polymer backbone. The polymer backbone of the toughener can be selected from elastomeric backbones comprising polyethylenes and copolymers thereof, e.g. ethylene-butene; ethylene-octene; polypropylenes and copolymers thereof; polybutenes; polyisoprenes; ethylene-propylene-rubbers (EPR); ethylene-propylene-diene monomer rubbers (EPDM); ethylene-acrylate rubbers; butadiene-acrylonitrile rubbers; ethylene-acrylic acid (EAA); ethylene-vinylacetate (EVA); acrylonitrile-butadiene-styrene rubbers (ABS); block copolymers styrene ethylene butadiene styrene (SEBS); block copolymers styrene butadiene styrene (SBS); core-shell elastomers of methacrylate-butadiene-styrene (MBS) type; or mixture of one or more of the above.

When the toughener is functionalized, the functionalization of the backbone can result from the copolymerization of monomers which include the functionalization or from the grafting of the polymer backbone with a further component.

Specific examples of functionalized tougheners are notably terpolymers of ethylene, acrylic ester and glycidyl methacrylate; copolymers of ethylene and butyl ester acrylate; copolymers of ethylene, butyl ester acrylate and glycidyl methacrylate; ethylene-maleic anhydride copolymers; EPR grafted with maleic anhydride; styrene copolymers grafted with maleic anhydride; SEBS copolymers grafted with maleic anhydride; styrene-acrylonitrile copolymers grafted with maleic anhydride or ABS copolymers grafted with maleic anhydride.

The toughener may be present in the composition (C) in a total amount of advantageously greater than 1, preferably greater than 2 and more preferably greater than 3 wt %, based on the total weight of the composition (C). The toughener may be present in the composition (C) in a total amount of advantageously less than 30, preferably less than 20, more preferably less than 15 and most preferably less than 10 wt %, based on the total weight of the composition (C).

Compositions (C) comprising the polymer (PGA) according to the invention, as defined above, and from 10 to 60 wt %, based on the total weight of the composition (C), of reinforcing fillers, preferably of glass fibers, are particularly preferred. Those comprising the polymer (PGA) according to the invention, as defined above, and from 20 to 50 wt %, based on the total weight of the composition (C), of reinforcing agents, preferably of glass fibers, are more particularly preferred. Such compositions (C) may also comprise other ingredients, preferably one or more tougheners.

Compositions (C) consisting of the polymer (PGA) according to the invention, as defined above, and from 10 to 60 wt %, preferably from 20 to 50 wt %, based on the total weight of the composition (C), of reinforcing agents, preferably of glass fibers, are most particularly preferred.

The invention further pertains to a method for producing a multilayer, optionally stretched, optionally thermoformed, product, said method comprising:
(i) forming a multilayer resin laminate including at least one layer of the polymer (PGA) as above detailed or of the composition (C) comprising the same, as above detailed, and at least one layer of a thermoplast different from the polymer (PGA), by processing from the melt;
(ii) optionally stretching the multilayer resin laminate;
(iii) optionally thermoforming the optionally stretched, laminate, so as to produce the multilayer, optionally stretched, optionally thermoformed, product.

The choice of thermoplast is not particularly limited, provided that it can be laminated, co-extruded or co-injected with a layer made of the polymer (PGA) or of the composition comprising the same.

Preferred examples of such thermoplast may include: polyester resins, such as polyethylene terephthalate and polyethylene naphthalate, polystyrene resins, acrylic acid or methacrylic acid resins, nylon resins, sulfide resins such as polyphenylene sulfide, polycarbonate resins, functionalized tie layer resins, adhesives and polyolefins. Among these, it is preferred to use a polyester resin, particularly an aromatic polyester resin composed of a diol component and a dicarboxylic acid component, of which at least one, particularly the dicarboxylic acid component, is an aromatic one, in order to provide a multilayer product which satisfies transparency and gas-barrier property in combination depending on the use thereof. Polyethylene terephthalate (PET) is particularly preferred.

The multilayer resin laminate can be of any shape or form; it can be notably under the form of a tubular laminate e.g. a parison, a flat laminate, a thermoformed laminate or a shaped container.

A preferred example of the multilayer resin laminate is a bottle preform, including a threaded end (the neck) and a closed-ended cylindrically shaped body.

The bottle preform as a multilayer resin laminate includes advantageously at least one layer of the polymer (PGA) as above detailed or of the composition (C) comprising the same, as above detailed, and at least one layer of a thermoplast different from the polymer (PGA), forming therefore a multilayer structure.

The bottle preform can include the multilayer structure throughout the cylindrically shaped body i.e. in its side walls and also in the closed-ended of the shaped body i.e.in its bottom wall (usually called "closed-dome bottle preform") or can include the multilayer structure only throughout the cylindrically shaped body i.e. in its side walls, thus leaving the closed-ended of the shaped body i.e. the bottom wall, as at least one layer of the thermoplast different from the polymer (PGA) (usually called "open-dome bottle preform").

Bottles formed from either open- or closed-dome bottle preforms maintain adavantageously similar gas barrier properties with similar barrier loadings. Bottles formed from open-dome bottle preforms present however advantageoulsy improved delamination resistance in the bottle bottom. This is advantageous as the majority of short and long term delamination occurs in the bottom of the bottle.

Open-dome bottle preform is particularly preferred.

In open-dome bottle preform, the multilayer structure can be included throughout all the cylindrically shaped body i.e. in its side walls, or can be confined to only a portion of the cylindrically shaped body.

In open-dome bottle preform, the polymer (PGA) layer inside the bottle pre-form represents advantageously at least 20 %, preferentially at least 50 %, more preferentially at least 70 % and most preferentially at least 90 % of the height of the cylindrically shaped body.

According to the very most preferred embodiment, the multilayer structure is included throughout all (100 % of) the cylindrically shaped body i.e. in its side walls, in open-dome bottle preform.

The bottle preform can include the multilayer structure in its neck too, advandageously without adverse effects on barrier performance. Preferably, the bottle preform doesn't include the multilayer structure in its neck.

The step of forming the said resin laminate can be performed by whichever technique involving processing the polymer (PGA) or the composition comprising the same and the thermoplast, while these are in the molten state.

Suitable preferred techniques are co-extrusion molding, and co-injection molding.

According the co-extrusion molding techniques, molten flows of the polymer (PGA) or the composition comprising the same and of the thermoplast are generated in dedicated screw extruders, and fed to a multiple slot die for providing the multilayer resin laminate.

In injection molding technique, molten shots of the polymer (PGA) or the composition comprising the same and of the thermoplast are injected in the same mold through a multi-shot nozzle.

In the optional step (ii), the multilayer resin laminate is stretched, generally at a temperature enabling plastic deformation, generally above the crystallization temperature.

According to certain embodiment's, the multilayer resin laminate is cooled and solidified after step (i) before undergoing step (ii). In this case, step (ii) includes a step of re-heating the multilayer laminate to a temperature which is above the glass transition temperature of the polymer (PGA) and the thermoplast, and the multilayer laminate is stretched while heated. Stretching can be achieved by blowing a pressurized gas, typically air; the stretching step may be performed within a mould forcing the multilayer stretched product to adhere to a welldetermined geometry or using a tenter frame.

According to other embodiment's, the multilayer resin laminate is submitted to step (ii) without any intermediary cooling and re-heating step.

According to certain embodiment's of this variant, an extruded multilayer resin laminate e.g. under the form of a parison can be blown using compressed air, while in the molten phase, directly as extruded from the die.

According to certain embodiment's of this variant, an extruded multilayer resin laminate e.g. under the form of a film can be stretched, e.g. mono-axially or bi-axially stretched using suitable stretching means operating in the machine and/or in the traverse directions.

According to these embodiment's, the multilayer stretched product can be notably a multilayer blown film (stretched in the molten phase), a multilayer cast film or a multilayer shrink film manufactured by double bubble process.

The invention further pertains to an article, advantageously a moulded article, comprising the polymer (PGA) according to the invention, the composition (C) according to the invention or the multilayer optionally stretched, optionaly thermoformed, product obtained by the process as above detailed.

The article according to the invention is preferably a bottle, preferably an open-dome bottle, an article for hydrocarbon resource recovery, a film for packaging, a feminine hygiene product, a disposable pod, a structural component for electronic applications or a biomedical article.

The bottle advantageously comprises the polymer (PGA) according to the invention, the composition (C) according to the invention or the multilayer stretched product obtained by the process as above detailed.

The bottle is preferably a bottle to be used for carbonated soft drinks, sparkling water or juices.

The bottle can be a closed-dome bottle or an open-dome bottle, formed from the corresponding bottle preform as described above, and is preferably an open-dome bottle. The details and preferences mentioned above for the bottle preform are the same for the bottle according to the invention.

The article for hydrocarbon resource recovery advantageously comprises the polymer (PGA) according to the invention or the composition (C) according to the invention.

The article for hydrocarbon resource recovery (such as petroleum/shale oil or natural gas/shale gas, often called oil and gas) is preferably a downhole tool, a downhole tool member or an element of a downhole tool member.

By "downhole tool", it is meant according to the present invention, a tool used to form a downhole (may be referred to as a "wellbore" or a "borehole" or a "subterranean drilling bore") provided at the time of well drilling from above the ground (including above water) toward a production reservoir to acquire a hydrocarbon resource such as petroleum such as shale oil, and natural gas such as shale gas, and serving as a flow path of the hydrocarbon resource to recover the hydrocarbon resource after completion of the well.

The downhole tool or the downhole tool member or the element of a downhole tool member advantageously refers to a piece of oilfield equipment that is used during drilling, completion or repair of downholes, including the tools used to perform plugging and fracturing of a borehole.

The downhole tool or downhole tool member or element of a downhole tool member is preferably selected from the group consisting of frac plugs or disintegratable plugs, bridge plugs, cement retainers, perforation gums, ball sealers, frac balls, diverting balls, ball seats, mandrels, slips, wedges, rings, seeling plugs, frac sleeves, fracture sleeve pistons (also known as a "piston" or "piston plugs") and packers.

One or more than one part of the downhole tool or of the downhole tool member or of the element of a downhole tool member, may be made of the polymer (PGA) according to the invention or of the composition (C) according to the invention. Alternatively, the totality of their structure may be made of the polymer (PGA) according to the invention or of the composition (C) according to the invention.

The downhole tool or downhole tool member or element of a downhole tool member of the invention may be manufactured using known melt processing techniques, such as injection molding, extrusion or any otherforming or thermoforming techniques.

The film for packaging advantageously comprises the polymer (PGA) according to the invention or the composition (C) according to the invention.

The film for packaging is preferably selected from the group consisting of flexible packaging films, shrink wraps (also called shrink films) and snack packages, and from rigid multilayer sheets (flat and thermoformed).

The feminine hygiene product advantageously comprises the polymer (PGA) according to the invention or the composition (C) according to the invention.

The feminine hygiene product is preferably selected from the group consisting of tampon applicators and feminine wipes.

The disposable pod advantageously comprises the polymer (PGA) according to the invention or the composition (C) according to the invention.

The disposable pod is preferably selected from the group of coffee pods and K-cups.

The structural component for electronic applications advantageously comprises the polymer (PGA) according to the invention or the composition (C) according to the invention.

The structural component for electronic applications is preferably selected from the group consisting of frames, supports and protective cases.

The biomedical article advantageously comprises the polymer (PGA) according to the invention or the composition (C) according to the invention.

The biomedical article is preferably selected from the group consisting of surgical sutures, surgical meshes, bone growth support and implants.

The article according to the invention is more preferably a bottle, preferably an open-dome bottle, an article for hydrocarbon resource recovery or a feminine hygiene product.

Should the disclosure of any patents, patent applications, and publications which are incorporated herein by reference conflict with the description of the present application to the extent that it may render a term unclear, the present description shall take precedence.

The invention will now be described in more detail with reference to the following examples, whose purpose is merely illustrative and not intended to limit the scope of the invention.

Determination method of residual methanesulfonic acid content in PGA

About 0. 1g of PGA was weighed in a 50 ml polypropylene autosampler tube and dissolved in 5 ml of concentrated nitric acid, heated at 95°C in an heating block. Then the solution was brought to 50 ml with ultrapure water, preceded by the addition of standard solution Sc 1 g/l (used as internal standard), and shaken. Each sample was prepared in duplicate.

This solution was then measured by inductively coupled plasma optical emission spectroscopy (ICP-OES) against a series of calibration solutions containing increasing amount of S, as well as the same concentrations of Sc standard and nitric acid as the samples. The instrument software automatically calculated the S concentrations in the solid sample.

### Determination of hydrolysis resistance.

10 grams of pellets of each of the PGA obtained in the examples were put in 250 ml of demineralized water in a closed glass bottle. During an ageing in oven at 38°C, measurement of the conductivity of water was performed each 24 hours and the amount of time required to have an increase of the conductivity of water (due to the release of glycolic acid) was taken as the hydrolysis resistance.

### Determination of melt viscosity and related properties.

Melt viscosity of samples was determined using a parallel plate rheometer according to ASTM D4440-08, at a temperature of 260°C, operating at a variable shear rate ranging from 1 to 100 sec⁻¹. The instrument used was a 25 mm diameter parallel plate rheometer available as DHR3 from TA Instruments. Values of tan δ (i.e. ratio between loss modulus G" and storage modulus G') were also determined. Values of melt stability was determined according to same ASTM D4440-08, by recording the melt viscosity, at a temperature of 260°C, under constant shear rate of 10 s⁻¹ as a function of time.

### Example 1 (according to the invention)

A 7.5 1 stainless steel double jacketed reactor, equipped with heater, condenser, temperature and pressure sensors and mechanical stirrer was charged with 4500 g of a 70 wt % of an aqueous glycolic acid solution (GA; 41.420 mole, taken as 1.0000 mol basis), 10.004 g of trimethylolpropane (TMP; 0.075 mole, 0.0018 mol per mol of GA), 3.584 g of cyclohexanedimethanol (CHDM, 0.025 mole, 0.0006 mol per mol of GA) and 0.536 g of methanesulfonic acid (MSA; 0.006 mole, 0.00014 mol per mol of GA).

The reactor was then closed and purged three times using alternatively vacuum and nitrogen. The reaction solution was heated rapidely to 50°C under mechanical stirring. Pressure was reduced to 600 mbar and heating was pursued from 50°C up to 100°C over 30 min. The water distillation was started. The temperature was slowly raised to 130°C over 60 min to gently pursue the water distillation. When most of the water was removed, the temperature was increased faster to 220°C over 30 min.

Once 220°C was reached, the pressure was progressively decreased down to 30 mbar over 30 min. Temperature was then finally raised up to 230°C and kept steady for the rest of the synthesis. The vacuum was applied for 270 min more to increase the GA conversion.

The reaction mixture was then brought back to atmospheric pressure using nitrogen. The PGA was drawn from the kettle through the bottom valve and recovered in SS trays over dry ice. The hard solidified PGA mass was taken out and weighed. Crude yield: 2.10 kg (~88 %).

The polymer was grinded into small particles with less than 2 mm diameter using a high speed grinder, classified through a 2 mm sieve and further dried in a vacuum oven at 90°C overnight.

In order to obtain an homogenuous particle size distribution and consistency, the powder was pelletized on a 19 mm diameter BRABENDER extruder, equipped with a 25 L/D monoscrew having a compression ratio of 3:1. The die was a one strand die (2 mm hole) and the strand was "die faced cut" in dry conditions. Screw speed used was 60 rpm and the temperature profile was kept low (flat temperature profile of 195 °C, 4 heating zones in the extruder; 1 heating zone in the die), to cope with the low viscosity of the pre-polymer melt polymerized. Typical output was around 2.1 kg/h. Pellet size obtained was approximately 2 mm diameter and approximately 3 mm length.

The pellets so-obtained were introduced in a double wall rotary tumbler unit for uniform mixing and further polymerization in the solid state by applying heat and pulling vacuum. The tumbler used had a 15 l total volume / 6 l usefull volume. About 2 kg of polymer was used per batch.

After closing the tumbler, rotation was started at 8 rpm. The vacum pump was started to reach 5 - 10 mbar vacuum in the tumbler. Simultanuously the tumbler was flushed with nitrogen (flow rate set at 50 l/h). Oil circulating in the double wall was heated in order to ramp up the temperature from room temparture to 214 °C in 16 h.

The tumbler was equipped with a sampling valve so that a specimen of reduced quantity of the polymer could be carefully taken out to analyze the melt viscosity using a parallel plate rheometer, at different times of solid state polymerization (SSP). After achieving the desired melt viscosity, the heating was stopped, the SSP was discontinued and the product was cooled down.

After 66 hours of SSP at 214°C, 1.8 kg of a PGA polymer having a melt viscosity of 647 Pa x sec at a shear rate of 10 sec⁻¹ was obtained.

The residual MSA in the final PGA after SSP was titrated according to the described method and found to be 0.005 mol % in regard to GA units.

### Example 2 (according to the invention)

The reactor described in Example 1 was charged with 4500 g of a 70 wt % of an aqueous glycolic acid solution (GA; 41.420 mole, taken as 1.0000 mol basis), 8.892 g of trimethylolpropane (TMP; 0.066 mole, 0.0016 mol per mol of GA), 9.557 g of cyclohexanedimethanol (CHDM, 0.066 mole, 0.0016 mol per mol of GA) and 0.536 g of methanesulfonic acid (MSA; 0.006 mole, 0.00014 mol per mol of GA).

The exact same protocol as Example 1 was applied and 2.20 kg of PGA were recovered (crude yield 92%).

The exact same protocole to pelletize the powder and increase melt viscosity by SSP was applied as in Example 1.

After 78 hours of SSP at 214°C, 1.8 kg of a PGA polymer having a melt viscosity of 634 Pa x sec at a shear rate of 10 sec⁻¹ was obtained.

The residual MSA in the final PGA after SSP was titrated according to the described method and found to be 0.005 mol % in regard to GA units.

### Example 1(C) (comparative example)

Using the same equipment and procotol as for Example 1, a load of 4500 g of a 70 wt % of an aqueous glycolic acid solution (GA; 41.420 mole, taken as 1.0000 mol basis), 8.892 g of trimethylolpropane (TMP; 0.066 mole, 0.0016 mol per mol of GA), 6.193 g of isophthalic acid (IPA, 0.037 mole, 0.0009 mol per mol of GA) and 0.819 g of methanesulfonic acid (MSA; 0.009 mole, 0.00021 mol per mol of GA), was converted into 2.15 kg of PGA (crude yield 90%).

The exact same protocole to pelletize the powder and increase melt viscosity by SSP was applied as in Example 1.

After 63 hours of SSP at 214°C, 1.8 kg of a PGA polymer having a melt viscosity of 582 Pa x sec at a shear rate of 10 sec⁻¹ was obtained.

The residual MSA in the final PGA after SSP was titrated according to the described method and found to be 0.005 mol % in regard to GA units.

### Example 2(C) (comparative example)

Similarly, a load of 4500 g of a 70 wt % of an aqueous glycolic acid solution (GA; 41.420 mole, taken as 1.0000 mol basis), 8.892 g of trimethylolpropane (TMP; 0.066 mole, 0.0016 mol per mol of GA) and 0.536 g of methanesulfonic acid (MSA; 0.006 mole, 0.00014 mol per mol of GA), was converted into 2.20 kg of PGA (crude yield 92%).

The exact same protocole to pelletize the powder and increase melt viscosity by SSP was applied as in Example 1.

After 48 hours of SSP at 214°C, 1.8 kg of a PGA polymer having a melt viscosity of 738 Pa x sec at a shear rate of 10 sec⁻¹ was obtained.

The residual MSA in the final PGA after SSP was titrated according to the described method and found to be 0.005 mol % in regard to GA units.

Tan δ and hydrolysis resistance measured on the PGA obtained in the different examples, according to the methods described above, are given in Table 1.

The melt viscosity over time at 260°C and 10 s⁻¹ (melt stability) for the PGA obtained in the different examples is given in Table 2.

**Table 1**

| Run | Melt viscosity (Pa x sec at a shear rate of 10 sec⁻¹) | Tan δ | Resistance to hydrolysis (hours) |
|---|---|---|---|
| Example 1 | 647 | 2.6 | 180 |
| Example 2 | 634 | 2.7 | 195 |
| Example 1(C) | 582 | 2.5 | 150 |
| Example 2(C) | 738 | 2.4 | 155 |

From the results given in Table 1, it can be seen that the PGA obtained according to the invention are characterized by a significant improvement of resistance to hydrolysis compared to the PGA obtained according to the comparative examples.

**Table 2**

| sec | min | Example 1 | Example 2 | Example 1(C) | Example 2(C) |
|---|---|---|---|---|---|
| 6 | 0.1 | 100 % | 100 % | 100 % | 100 % |
| 600 | 10 | 97 % | 98 % | 88 % | 84% |
| 900 | 15 | 88 % | 90% | 72% | 73 % |
| 1200 | 20 | 80 % | 83 % | 61 % | 64 % |
| 1500 | 25 | 73 % | 76 % | 52% | 58 % |

From the results given in Table 2, it can be seen that the PGA obtained according to the invention are characterized by a melt stability over time which is significantly improved compared to the melt stability over time of the PGA obtained according to the comparative examples.

This leads to significant benefits in terms of the PGA processing window for typical melt processing techniques. Such more stable PGA is easier to handle and has a more predictable rheological behavior during pelletization, compounding, injection molding, blow molding, compression molding and film extrusion. This also reduces the need for extra moisture protection on the equipment. It also allows the polymer to be melt processed more than one time without the melt strength falling below an acceptable level for typical melt processes.

## Claims

1. A glycolic acid polymer [polymer (PGA)], said polymer PGA being obtained from polycondensation reaction of a monomer mixture consisting of:
(i) glycolic acid (GA);
(ii) optionally, at least one hydroxyacid having only one hydroxyl group and only one carboxylic acid group different from GA [hydroxyacid (A)], wherein the molar amount of hydroxyacid (A) is of at most 5 % moles with respect to the sum of moles of GA and hydroxyacid (A);
(iii) at least one polyol comprising at least three hydroxyl groups and being free from carboxylic acid group [polyol (H)];
(iv) at least one alcohol comprising one or two hydroxyl groups and being free from carboxylic acid group [alcohol (AO)];
(v) optionally at least one carboxylic acid comprising one carboxylic acid group and being free from hydroxyl group [monoacid (C)].

2. The polymer (PGA) according to Claim 1, wherein
• the amont of polyol (H) is such that the number of hydroxyl groups thereof is comprised between 0.050 and 1.200 % with respect to the overall number of carboxyl groups of glycolic acid and of the hydroxyacid (A), if present;
• the amount of alcohol (AO) is such that the number of hydroxyl groups thereof is comprised between 0.010 and 0.750 % with respect to the overall number of carboxylic groups of glycolic acid and of the hydroxyacid (A), if present; and
• the amount of monoacid (C), when present, is such that the number of carboxylic acid groups thereof is comprised between 0.010 and 2.0 % with respect to the overall number of hydroxyl groups of glycolic acid and of the hydroxyacid (A), if present.

3. The polymer (PGA) according to either Claim 1 or 2, wherein the hydroxyacid (A) is selected from the group consisting of lactic acid, 3-hydroxybutyric acid, 4-hydroxybutyric acid, 4-hydroxyvaleric acid, 5-hydroxyvaleric acid and 6-hydroxycaproic acid, preferably the hydroxyacid (A) is lactic acid (LA) (L- or D- isomer, either in racemic mixture or as single isomer), and/or wherein the hydroxyacid (A) is present in an amount of at most 4 % moles, more preferably of at most 3 % moles, with respect to the sum of moles of GA and of hydroxyacid (A).

4. The polymer (PGA) according to any one of the preceeding claims, wherein the polyol (H) is selected from the group consisting of:
- triols, in particularly selected from the group consisting of glycerol, trimethylolethane, trimethylolpropane, trimethylolbutane, 2,3-di(2'-hydroxyethyl)-cyclohexane-1-ol, hexane-1,2,6-triol, 1,1,1-tris(hydroxymethyl)ethane, 3-(2'-hydroxyethoxy)propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-tris-[(2'-hydroxyethoxy)-methylethane, 1,1,1-tris-[(2'-hydroxypropoxy)-methyl-propane, 1,1,1-tris-(4'-hydroxyphenyl)ethane, 1,1,1-tris-(hydroxyphenyl)-propane, 1,1,5-tris-(hydroxyphenyl)-3-methylpentane, trimethylolpropane ethoxylate, trimethylolpropane propoxylate, tris(hydroxymethyl)aminomethane;
- tetraols, in particularly selected from the group consisting of diglycerol, di(trimethylolpropane), pentaerythritol, 1,1,4-tris-(dihydroxyphenyl)-butane;
- polyols comprising 5 hydroxyl groups, in particular triglycerol;
- polyols comprising 6 hydroxyl groups, in particular dipentaerythritol, mannitol, sorbitol; and
- polyols comprising 8 hydroxyl groups, in particular tripentaerythritol;
and/or wherein the polyol (H) is used in an amount such that the number of hydroxyl groups thereof is of at least 0.050 %, preferably at least 0.075 %, more preferably of at least 0.100 %, most preferably of at least 0.120 % and/or of at most 1.200 %, preferably of at most 1.000 %, more preferably of at most 0.750 %, particularly more preferably of at most 0.650 % and most preferably of at most 0.600 %, with respect to the overall number of carboxylic groups of glycolic acid and of the hydroxyacid (A), if present.

5. The polymer (PGA) according to anyone of the preceding claims, wherein the alcohol (AO) is a diol (D) which is preferably **characterized by** a boiling point at atomospheric pressure, of at least 100°C, preferably of at least 150°C, more preferably of at least 200°C and most preferably of at least 230°C, and/or a diol (D) which is preferably used in an amount such that the number of hydroxyl groups thereof is of at least 0.010 %, preferably of at least 0.050 %, more preferably of at least 0.080 % and most preferably of at least 0.100 % and/or of at most 0.750 %, preferably of at most 0.700 %, more preferably of at most 0.650 %, with respect to the overall number of carboxylic groups of glycolic acid and of the hydroxyacid (A), if present.

6. The polymer (PGA) according to anyone of the preceding claims, wherein the alcohol (AO) is a diol (D) which is selected from diethyleneglycol, 1,4-cyclohexane dimethanol, isosorbide, isoidide, dodecane 1, 12-diol and mixtures thereof.

7. The polymer (PGA) according to anyone of the preceding claims, wherein the monoacid (C) is an aliphatic monoacid of formula: R_{Hm}-COOH (formula C-1) wherein R_{Hm} is a monovalent aliphatic group having one or more than one carbon atom, in particular having 3 or more carbon atoms, or an aromatic monoacid selected from the group consisting of benzoic acid, naphthoic acid and phenylacetic acid.

8. A method of making the polymer (PGA) according to anyone of the preceding claims, said method comprising polycondensing glycolic acid (GA), optionally at least one hydroxyacid (A), at least one polyol (H), at least one alcohol (AO) and optionally at least one monoacid (C), as defined in the preceding claims; preferably the method includes a first step of polymerization in the molten state to form a pre-polymer and a second step of solid state polymerization (SSP) for increasing molecular weight of the pre-polymer.

9. A composition (C) comprising the polymer (PGA) according to anyone of Claims 1 to 7 and at least one additional ingredient, wherein the said ingredient may be notably selected from anti-oxidants, thermal stabilizers, buffers, UV and light stabilizers, pigments, lubricants, processing aids, hydrolytic stabilizers, reinforcing agents, tougheners, plasticizers, colorants, antistatic agents, flame retardants, nucleating agents and other processing aids.

10. The composition (C) according to Claim 9, wherein the composition (C) comprises the polymer (PGA) according to anyone of Claims 1 to 7 and from 10 to 60 wt %, preferably from 20 to 50 wt %, based on the total weight of the composition (C), of reinforcing agents, preferably of glass fibers.

11. A method for producing a multilayer, optionally stretched, optionally thermoformed, product, said method comprising:
(i) forming a multilayer resin laminate including at least one layer of the polymer (PGA) according to anyone of Claims 1 to 7 or of the composition (C) according to either Claim 9 or 10, and at least one layer of a thermoplast different from the polymer (PGA), by processing from the melt;
(ii) optionally stretching the multilayer resin laminate,
(iii) optionally thermoforming the optionally stretched, laminate, so as to produce the multilayer, optionally stretched, optionally thermoformed, product.

12. An article comprising the polymer (PGA) according to anyone of Claim 1 to 7, the composition (C) according to either Claim 9 or 10 or the multilayer, optionally stretched, optionally thermoformed, product obtained by the process according to Claim 11.

13. The article according to Claim 12, wherein the article is a bottle, preferably an open-dome bottle, an article for hydrocarbon resource recovery, a film for packaging, a feminine hygiene product, a disposable pod, a structural component for electronic applications or a biomedical article.

14. The article according to either Claim 12 or 13, wherein the article is a bottle, preferably an open-dome bottle, an article for hydrocarbon resource recovery or a feminine hygiene product.

## Patentansprüche

1. Glykolsäurepolymer [Polymer (PGA)], wobei das Polymer PGA aus der Polykondensationsreaktion einer Monomerenmischung erhalten wird, die aus Folgendem besteht:
(i) Glykolsäure (GA);
(ii) gegebenenfalls mindestens eine Hydroxysäure mit nur einer Hydroxylgruppe und nur einer Carbonsäuregruppe, die von GA verschieden ist [Hydroxysäure (A)], wobei die molare Menge an Hydroxysäure (A) höchstens 5 Mol-%, bezogen auf die Summe der Mole von GA und Hydroxysäure (A), beträgt;
(iii) mindestens ein Polyol, das mindestens drei Hydroxylgruppen umfasst und frei von Carbonsäuregruppen ist [Polyol (H)];
(iv) mindestens ein Alkohol, der eine oder zwei Hydroxylgruppen umfasst und frei von Carbonsäuregruppen ist [Alkohol (AO)];
(v) gegebenenfalls mindestens eine Carbonsäure, die eine Carbonsäuregruppe umfasst und frei von Hydroxylgruppen ist [Monosäure (C)].

2. Polymer (PGA) nach Anspruch 1, wobei
• die Menge von Polyol (H) so beschaffen ist, dass die Zahl der Hydroxylgruppen davon zwischen 0,050 und 1,200 %, bezogen auf die Gesamtzahl der Carboxylgruppen von Glykolsäure und der Hydroxysäure (A), falls vorhanden, liegt;
• die Menge von Alkohol (AO) so beschaffen ist, dass die Zahl der Hydroxylgruppen davon zwischen 0,010 und 0,750 %, bezogen auf die Gesamtzahl der Carboxylgruppen von Glykolsäure und der Hydroxysäure (A), falls vorhanden, liegt; und
• die Menge von Monosäure (C), falls vorhanden, so beschaffen ist, dass die Zahl der Carbonsäuregruppen davon zwischen 0,010 und 2,0 % bezogen auf die Gesamtzahl der Hydroxylgruppen von Glykolsäure und der Hydroxysäure (A), falls vorhanden, liegt.

3. Polymer (PGA) nach Anspruch 1 oder 2, wobei die Hydroxysäure (A) aus der Gruppe bestehend aus Milchsäure, 3-Hydroxybuttersäure, 4-Hydroxybuttersäure, 4-Hydroxyvaleriansäure, 5-Hydroxyvaleriansäure und 6-Hydroxycapronsäure ausgewählt ist, vorzugsweise die Hydroxysäure (A) Milchsäure (LA) (L- oder D-Isomer, entweder in racemischem Gemisch oder als einzelnes Isomer) ist und/oder wobei die Hydroxysäure (A) in einer Menge von höchstens 4 Mol-%, bevorzugter von höchstens 3 Mol-%, bezogen auf die Summe der Mole von GA und Hydroxysäure (A), vorliegt.

4. Polymer (PGA) nach einem der vorhergehenden Ansprüche, wobei das Polyol (H) aus der Gruppe bestehend aus
- Triolen, insbesondere ausgewählt aus der Gruppe bestehend aus Glycerin, Trimethylolethan, Trimethylolpropan, Trimethylolbutan, 2,3-Di(2'-hydroxyethyl)cyclohexan-1-ol, Hexan-1,2,6-triol, 1,1,1-Tris(hydroxymethyl)ethan, 3-(2'-Hydroxyethoxy)propan-1,2-diol, 3-(2'-Hydroxypropoxy)propan-1,2-diol, 2-(2'-Hydroxyethoxy)hexan-1,2-diol, 6-(2'-Hydroxypropoxy)hexan-1,2-diol, 1,1,1-Tris-[(2'-hydroxyethoxy)methylethan, 1,1,1-Tris-[(2'-hydroxypropoxy)methylpropan, 1,1,1-Tris-(4'-hydroxyphenyl)ethan, 1,1,1-Tris(hydroxyphenyl)propan, 1,1,5-Tris(hydroxyphenyl)-3-methylpentan, Trimethylolpropanethoxylat, Trimethylolpropanpropoxylat, Tris(hydroxymethyl)aminomethan;
- Tetraolen, insbesondere ausgewählt aus der Gruppe bestehend aus Diglycerin, Di(trimethylolpropan), Pentaerythrit, 1,1,4-Tris(dihydroxyphenyl)butan;
- Polyolen mit 5 Hydroxylgruppen, insbesondere Triglycerin;
- Polyolen mit 6 Hydroxylgruppen, insbesondere Dipentaerythrit, Mannit, Sorbit; und
- Polyolen mit 8 Hydroxylgruppen, insbesondere Tripentaerythrit;
ausgewählt ist und/oder wobei das Polyol (H) in einer solchen Menge verwendet wird, dass die Zahl der Hydroxylgruppen davon mindestens 0,050 %, bevorzugt mindestens 0,075 %, bevorzugter mindestens 0,100 %, am meisten bevorzugt mindestens 0,120 % und/oder höchstens 1,200 %, bevorzugt höchstens 1,000 %, bevorzugter höchstens 0,750 %, besonders bevorzugt höchstens 0,650 % und am meisten bevorzugt höchstens 0,600 %, jeweils bezogen auf die Gesamtzahl der Carboxylgruppen von Glykolsäure und der Hydroxysäure (A), falls vorhanden, beträgt.

5. Polymer (PGA) nach einem der vorhergehenden Ansprüche, wobei es sich bei dem Alkohol (AO) um ein Diol (D), das vorzugsweise durch einen Siedepunkt bei Normaldruck von mindestens 100 °C, bevorzugt von mindestens 150 °C, bevorzugter von mindestens 200 °C und am meisten bevorzugt von mindestens 230 °C gekennzeichnet ist, und/oder ein Diol (D), das vorzugsweise in einer solchen Menge verwendet wird, dass die Zahl der Hydroxylgruppen davon mindestens 0,010 %, bevorzugt mindestens 0,050 %, bevorzugter mindestens 0,080 % und am meisten bevorzugt von mindestens 0,100 % und/oder höchstens 0,750 %, bevorzugt höchstens 0,700 %, bevorzugter höchstens 0,650 %, jeweils bezogen auf die Gesamtzahl der Carboxylgruppen von Glykolsäure und der Hydroxysäure (A), falls vorhanden, beträgt, handelt.

6. Polymer (PGA) nach einem der vorhergehenden Ansprüche, wobei es sich bei dem Alkohol (AO) um ein Diol (D) handelt, das aus Diethylenglykol, 1,4-Cyclohexandimethanol, Isosorbid, Isoidid, Dodecan-1,12-diol und Gemischen davon ausgewählt ist.

7. Polymer (PGA) nach einem der vorhergehenden Ansprüche, wobei es sich bei der Monosäure (C) um eine aliphatische Monosäure der Formel R_{Hm}-COOH (Formel C-1), wobei R_{Hm} für eine einwertige aliphatische Gruppe mit einem oder mehr als einem Kohlenstoffatom, insbesondere mit 3 oder mehr Kohlenstoffatomen steht, oder eine aromatische Monosäure, die aus der Gruppe bestehend aus Benzoesäure, Naphthoesäure und Phenylessigsäure ausgewählt ist, handelt.

8. Verfahren zur Herstellung des Polymers (PGA) nach einem der vorhergehenden Ansprüche, wobei das Verfahren das Polykondensieren von Glykolsäure (GA), gegebenenfalls mindestens einer Hydroxysäure (A), mindestens einem Polyol (H), mindestens einem Alkohol (AO) und gegebenenfalls mindestens einer Monosäure (C) gemäß den vorhergehenden Ansprüchen umfasst; vorzugsweise umfasst das Verfahren einen ersten Schritt der Polymerisation in schmelzflüssigem Zustand zur Bildung eines Prepolymers und einen zweiten Schritt der Festphasenpolymerisation (SSP) zur Erhöhung des Molekulargewichts des Prepolymers.

9. Zusammensetzung (C), umfassend das Polymer (PGA) nach einem der Ansprüche 1 bis 7 und mindestens einen zusätzlichen Bestandteil, wobei der Bestandteil insbesondere aus Antioxidantien, Wärmestabilisatoren, Puffern, UV- und Lichtschutzmitteln, Pigmenten, Schmiermitteln, Verarbeitungshilfen, Hydrolyseschutzmitteln, Verstärkungsmitteln, Zähigkeitsvermittlern, Weichmacher, Farbstoffen, Antistatika, Flammschutzmitteln, Keimbildnern und anderen Verarbeitungshilfen ausgewählt sein kann.

10. Zusammensetzung (C) nach Anspruch 9, wobei die Zusammensetzung (C) das Polymer (PGA) nach einem der Ansprüche 1 bis 7 und 10 bis 60 Gew.-%, bevorzugt 20 bis 50 Gew.-%, bezogen auf das Gesamtgewicht der Zusammensetzung (C), Verstärkungsmittel, vorzugsweise Glasfasern, umfasst.

11. Verfahren zur Herstellung eines mehrschichtigen, gegebenenfalls gestreckten, gegebenenfalls thermogeformten Produkts, wobei das Verfahren Folgendes umfasst:
(i) Bilden eines mehrschichtigen Harzlaminats mit mindestens einer Schicht des Polymers (PGA) nach einem der Ansprüche 1 bis 7 oder der Zusammensetzung (C) nach Anspruch 9 oder 10 und mindestens einer Schicht aus einem Thermoplast, der von dem Polymer (PGA) verschieden ist, durch Verarbeiten aus der Schmelze;
(ii) gegebenenfalls Strecken des mehrschichtigen Harzlaminats,
(iii) gegebenenfalls Thermoformen des gegebenenfalls gestreckten Laminats zur Herstellung des mehrschichtigen, gegebenenfalls gestreckten, gegebenenfalls thermogeformten Produkts.

12. Artikel, umfassend das Polymer (PGA) nach einem der Ansprüche 1 bis 7, die Zusammensetzung (C) nach Anspruch 9 oder 10 oder das mehrschichtige, gegebenenfalls gestreckte, gegebenenfalls thermogeformte Produkt, erhalten durch das Verfahren nach Anspruch 11.

13. Artikel nach Anspruch 12, wobei es sich bei dem Artikel um eine Flasche, vorzugsweise eine Flasche mit offener Kuppel, einen Artikel zur Gewinnung von Kohlenwasserstoffressourcen, eine Verpackungsfolie, ein Damenhygieneprodukt, eine Einwegkapsel, ein Bauteil für elektronische Anwendungen oder einen biomedizinischen Artikel handelt.

14. Artikel nach Anspruch 12 oder 13, wobei es sich bei dem Artikel um eine Flasche, vorzugsweise eine Flasche mit offener Kuppel, einen Artikel zur Gewinnung von Kohlenwasserstoffressourcen, oder ein Damenhygieneprodukt handelt.

## Revendications

1. Polymère d'acide glycolique [polymère (PGA)], ledit polymère PGA étant obtenu à partir d'une réaction de polycondensation d'un mélange de monomères constitué de :
(i) l'acide glycolique (GA) ;
(ii) optionnellement, au moins un hydroxyacide comportant un seul groupe hydroxyle et un seul groupe acide carboxylique différent du GA [hydroxyacide (A)], la quantité molaire d'hydroxyacide (A) étant d'au maximum 5 %mol, relativement à la somme des moles du GA et de l'hydroxyacide (A) ;
(iii) au moins un polyol comprenant au moins trois groupes hydroxyle et exempt de groupe acide carboxylique [polyol (H)] ;
(iv) au moins un alcool comprenant un ou deux groupes hydroxyle et exempt de groupe acide carboxylique [alcool (AO)] ;
(v) optionnellement, au moins un acide carboxylique comprenant un groupe acide carboxylique et exempt de groupe hydroxyle [monoacide (C)].

2. Polymère (PGA) selon la revendication 1, dans lequel
• la quantité de polyol (H) est telle que le nombre de groupes hydroxyle de celui-ci est compris entre 0,050 et 1,200 % relativement au nombre total de groupes carboxyle de l'acide glycolique et de l'hydroxyacide (A), si celui-ci est présent ;
• la quantité d'alcool (AO) est telle que le nombre de groupes hydroxyle de celui-ci est compris entre 0,010 et 0,750 % relativement au nombre total de groupes carboxyliques de l'acide glycolique et de l'hydroxyacide (A), si celui-ci est présent ; et
• la quantité de monoacide (C), lorsque celui-ci est présent, est telle que le nombre de groupes acide carboxylique de celui-ci est compris entre 0,010 et 2,0 % relativement au nombre total de groupes hydroxyle de l'acide glycolique et de l'hydroxyacide (A), si celui-ci est présent.

3. Polymère (PGA) selon l'une ou l'autre des revendications 1 ou 2, dans lequel l'hydroxyacide (A) est sélectionné dans le groupe constitué de l'acide lactique, de l'acide 3-hydroxybutyrique, de l'acide 4-hydroxybutyrique, de l'acide 4-hydroxyvalérique, de l'acide 5-hydroxyvalérique et de l'acide 6-hydroxycaproïque, l'hydroxyacide (A) étant préférablement l'acide lactique (LA) (isomère L ou D, soit en mélange racémique soit sous la forme d'un seul isomère), et/ou dans lequel l'hydroxyacide (A) est présent en une quantité d'au maximum 4 %mol, plus préférablement d'au maximum 3 %mol, relativement à la somme des moles du GA et de l'hydroxyacide (A).

4. Polymère (PGA) selon l'une quelconque des revendications précédentes, dans lequel le polyol (H) est sélectionné dans le groupe constitué de :
- triols, en particulier sélectionnés dans le groupe constitué du glycérol, du triméthyloléthane, du triméthylolpropane, du triméthylolbutane, du 2,3-di(2'-hydroxyéthyl)cyclohexan-1-ol, de l'hexane-1,2,6-triol, du 1,1,1-tris(hydroxyméthyl)éthane, du 3-(2'-hydroxyéthoxy)propane-1,2-diol, du 3-(2'-hydroxypropoxy)propane-1,2-diol, du 2-(2'-hydroxyéthoxy)hexane-1,2-diol, du 6-(2'-hydroxypropoxy)hexane-1,2-diol, du 1,1,1-tris[(2'-hydroxyéthoxy)méthyléthane, du 1,1,1-tris[(2'-hydroxypropoxy)méthylpropane, du 1,1,1-tris(4'-hydroxyphényl)éthane, du 1,1,1-tris(hydroxyphényl)propane, du 1,1,5-tris (hydroxyphényl)-3-méthylpentane, de l'éthoxylate de triméthylolpropane, du propoxylate de triméthylolpropane, du tris(hydroxyméthyl)aminométhane ;
- de tétraols, en particulier sélectionnés dans le groupe constitué du diglycérol, du di(triméthylolpropane), du pentaérythritol, du 1,1,4-tris(dihydroxyphényl)butane ;
- de polyols comprenant 5 groupes hydroxyle, en particulier le triglycérol ;
- de polyols comprenant 6 groupes hydroxyle, en particulier le dipentaérythritol, le mannitol, le sorbitol ; et
- de polyols comprenant 8 groupes hydroxyle, en particulier le tripentaérythritol ;
et/ou dans lequel le polyol (H) est utilisé en une quantité telle que le nombre de groupes hydroxyle de celui-ci est d'au moins 0,050 %, préférablement d'au moins 0,075 %, plus préférablement d'au moins 0,100 %, le plus préférablement d'au moins 0,120 % et/ou d'au maximum 1,200 %, préférablement d'au maximum 1,000 %, plus préférablement d'au maximum 0,750 %, particulièrement plus préférablement d'au maximum 0,650 % et le plus préférablement d'au maximum 0,600 %, relativement au nombre total de groupes carboxyliques de l'acide glycolique et de l'hydroxyacide (A), si celui-ci est présent.

5. Polymère (PGA) selon l'une quelconque des revendications précédentes, dans lequel l'alcool (AO) est un diol (D) qui est préférablement **caractérisé par** un point d'ébullition à pression atmosphérique d'au moins 100 °C, préférablement d'au moins 150 °C, plus préférablement d'au moins 200 °C et le plus préférablement d'au moins 230 °C et/ou un diol (D) qui est préférablement utilisé en une quantité telle que le nombre de groupes hydroxyle de celui-ci est d'au moins 0,010 %, préférablement d'au moins 0,050 %, plus préférablement d'au moins 0,080 % et le plus préférablement d'au moins 0,100 % et/ou d'au maximum 0,750 %, préférablement d'au maximum 0,700 %, plus préférablement d'au maximum 0,650 %, relativement au nombre total de groupes carboxyliques de l'acide glycolique et de l'hydroxyacide (A), si celui-ci est présent.

6. Polymère (PGA) selon l'une quelconque des revendications précédentes, dans lequel l'alcool (AO) est un diol (D) qui est sélectionné parmi le diéthylèneglycol, le 1,4-cyclohexanediméthanol, l'isosorbide, l'isoidide, le dodécane-1,12-diol et les mélanges de ceux-ci.

7. Polymère (PGA) selon l'une quelconque des revendications précédentes, dans lequel le monoacide (C) est un monoacide aliphatique selon la formule : R_{Hm}-COOH (formule C-1) dans laquelle R_{Hm} est un groupe aliphatique monovalent comportant un ou plusieurs atomes de carbone, en particulier comportant 3 atomes de carbone ou plus, ou un monoacide aromatique sélectionné dans le groupe constitué de l'acide benzoïque, de l'acide naphtoïque et de l'acide phénylacétique.

8. Procédé de fabrication du polymère (PGA) selon l'une quelconque des revendications précédentes, ledit procédé comprenant une polycondensation d'acide glycolique (GA), optionnellement d'au moins un hydroxyacide (A), d'au moins un polyol (H), d'au moins un alcool (AO) et optionnellement d'au moins un monoacide (C), tels que définis dans les revendications précédentes ; préférablement, le procédé incluant une première étape de polymérisation à l'état fondu pour former un prépolymère et une seconde étape de polymérisation à l'état solide (PES) permettant d'augmenter la masse moléculaire du prépolymère.

9. Composition (C) comprenant le polymère (PGA) selon l'une quelconque des revendications 1 à 7 et au moins un ingrédient additionnel, ledit ingrédient pouvant être sélectionné notamment parmi des antioxydants, des stabilisants thermiques, des tampons, des stabilisants aux UV et à la lumière, des pigments, des lubrifiants, des auxiliaires technologiques, des stabilisants vis-à-vis de l'hydrolyse, des agents de renforcement, des agents de ténacité, des plastifiants, des colorants, des agents antistatiques, des agents ignifugeants, des agents de nucléation et d'autres auxiliaires technologiques.

10. Composition (C) selon la revendication 9, la composition (C) comprenant le polymère (PGA) selon l'une quelconque des revendications 1 à 7 et de 10 à 60 % en poids, préférablement de 20 à 50 % en poids, par rapport au poids total de la composition (C), d'agents de renforcement, préférablement de fibres de verre.

11. Procédé permettant de produire un produit multicouche, optionnellement étiré, optionnellement thermoformé, ledit procédé comprenant :
(i) la formation d'un stratifié de résine multicouche incluant au moins une couche du polymère (PGA) selon l'une quelconque des revendications 1 à 7 ou de la composition (C) selon l'une ou l'autre des revendications 9 ou 10 et au moins une couche d'un polymère thermoplastique différent du polymère (PGA), par transformation à partir de la masse fondue ;
(ii) optionnellement l'étirage du stratifié de résine multicouche,
(iii) optionnellement le thermoformage du stratifié optionnellement étiré, afin de produire le produit multicouche, optionnellement étiré, optionnellement thermoformé.

12. Article comprenant le polymère (PGA) selon l'une quelconque des revendications 1 à 7, la composition (C) selon l'une ou l'autre des revendications 9 ou 10 ou le produit multicouche, optionnellement étiré, optionnellement thermoformé, obtenu par le procédé selon la revendication 11.

13. Article selon la revendication 12, l'article étant une bouteille, préférablement une bouteille à dôme ouvert, un article pour la récupération de ressources hydrocarbonées, un film pour l'emballage, un produit d'hygiène féminine, une capsule jetable, un composant de structure pour des applications électroniques ou un article biomédical.

14. Article selon l'une ou l'autre des revendications 12 ou 13, l'article étant une bouteille, préférablement une bouteille à dôme ouvert, un article pour la récupération de ressources hydrocarbonées ou un produit d'hygiène féminine.
